# EUROPÄISCHE PATENTSCHRIFT

(11) **EP 0 773 376 B1**
(45) Veröffentlichungstag und Bekanntmachung des Hinweises auf die Patenterteilung: **12.01.2000**
(21) Anmeldenummer: 95810711.2
(22) Anmeldetag: 13.11.1995
(51) Int. Cl.: F16C 9/02

(54) **Kurbelwellenlager**
Crankshaft bearing
Palier de vilebrequin

(43) Veröffentlichungstag der Anmeldung: 14.05.1997
(73) Patentinhaber: Wärtsilä NSD Schweiz AG, 8401 Winterthur (CH)
(72) Erfinder: Resch, Paul, CH-8700 Küsnacht (CH)
(74) Vertreter: Hammer, Bruno Dr.

(56) Entgegenhaltungen:
- FR-A- 890 621

## Beschreibung

Die Erfindung betrifft ein Kurbelwellenlager gemäss dem Oberbegriff von Anspruch 1.

Aus der CH-PS 620 023 ist ein solcher Kurbelwellenlager bekannt, bei dem Führungsflächen am Lagerdeckel und Gegenflächen im Gehäuse in geeigneter Weise ausgestaltet sind, derart, dass bei der Montage des Deckels keine Gefahr für ein Klemmen besteht. Allerdings lässt sich bei diesem bekannten Lager eine spielfreie Anordnung des Deckels nicht herstellen.

Bei Kreuzkopf-Dieselmotoren ergeben sich durch rotierende Massen hohe horizontal wirkende Lagerbelastungen. Damit das Lager im Betrieb einwandfrei funktioniert, muss der Lagerdeckel an Gegenflächen der Motorgrundplatte spielfrei anliegen. Es ist schwierig, diese Forderung zu erfüllen, da bei der Montage des Lagerdeckels ein gewisses Spiel gegenüber den genannten Gegenflächen vorhanden sein muss.

Diese Schwierigkeit wird durch folgende Tatsache verschärft: Die Grundplatte des Dieselmotors wird mittels Zuganker mit einem Gehäuse und einem Zylindermantel zusammengespannt. Aufgrund der Zugkräfte vergrössert sich in horizontaler Richtung der für den Lagerdeckel vorgesehene Raum zwischen den Gegenflächen um einige Zehntelmillimeter. Die Montage des Deckels muss auch bei nicht gespannten Zugankern möglich sein. Es besteht somit das Problem, wie die Lücken zwischen Deckel und Gegenflächen, die nach der Montage und nach dem Spannen der Zuganker vorliegen, sich beseitigen lassen.

Es ist daher Aufgabe der Erfindung, eine spielfreie Anordnung des Lagerdeckels ermöglichen, indem nämlich Lücken zwischen Deckel und Gegenflächen eliminiert werden. Diese Aufgabe lässt sich mit der im Anspruch 1 genannten Ausgestaltung lösen.

Das Kurbelwellenlager weist einen Lagerdeckel auf, der zwei Schenkel und zwei den Schenkeln jeweils zugeordnete Flansche umfasst. Die Flansche lassen sich mittels Schrauben gegen eine Grundplatte spannen; dabei werden gleichzeitig die Schenkel an Stossstellen gegen eine Lagerschale der Grundplatte gepresst. Erfindungsgemäss ist zwischen den Schenkeln und deren zugeordneten Flanschen jeweils eine spezielle seitliche Ausnehmung im Lagerdeckel vorgesehen, aufgrund der Tiefe dieser Ausnehmung und unter Einwirkung der Schraubenkräfte greifen an den Schenkeln Kräftepaare an, die eine Spreizung der Schenkel bewirken, bei der die Schenkel bezüglich dem Zentrum des Lagers nach aussen ausgelenkt werden.

Die abhängigen Ansprüche 2 bis 9 beziehen sich auf besondere Ausführungsformen des erfindungsgemässen Lagers. Gegenstand des Anspruchs 10 ist ein Dieselmotor.

Nachfolgend wird die Erfindung anhand der Zeichnungen erläutert. Es zeigen:
- Fig. 1: einen Dieselmotor ohne Kurbelwellenlager sowie Welle, gesehen in Richtung der Kurbelwelle,
- Fig. 2: einen Teil eines erfindungsgemässen Kurbelwellenlagers,
- Fig. 3: Details zu dem Lager der Fig.2,
- Fig. 4: ein Schrägbild, das die Hälfte eines erfindungsgemässen Kurbelwellenlagers darstellt,
- Fig. 5: eine zweite Ausführungsform des Lagerdeckels,
- Fig. 6: eine dritte Ausführungsform des Lagerdeckels und
- Fig. 7: eine besondere Geometrie der Verbindung zwischen Lagerdeckel und Grundplatte.

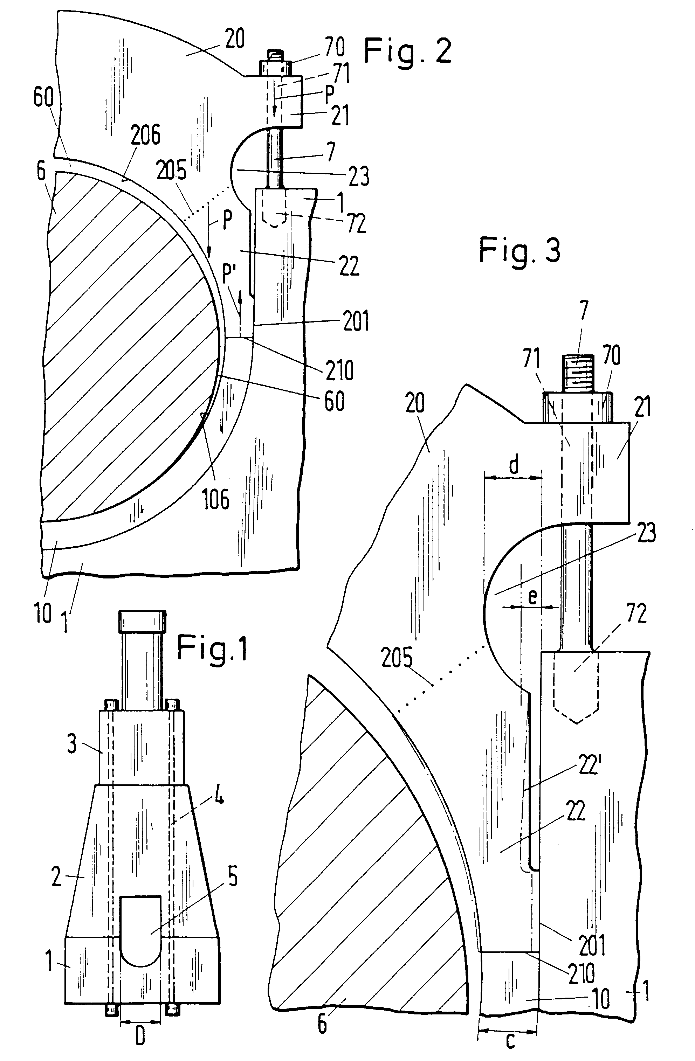

Fig.1 zeigt folgende Teile eines Dieselmotors: eine Grundplatte 1, ein Gehäuse 2, einen Zylindermantel 3, Zuganker 4 und eine Öffnung 5 für ein Kurbelwellenlager. Bei gespannten Zugankern 4 ist der horizontale Durchmesser D der Öffnung 5 um einige Zehntelmillimeter grösser als bei nicht gespannten Zugankern.

Das Lager der Kurbelwelle 6 in Fig.2 umfasst eine Lagerschale 10, die in der Grundplatte 1 angeordnet ist, und einen Lagerdeckel 20, der an Flanschen 21 (mit Bohrungen 71) mittels Stiftschrauben 7 (Muttern 70) an der Grundplatte 1 (mit Gewinden 72) befestigt und auf dieser aufgespannt ist (Spannkraft P). Anstelle der Stiftschrauben 7 können auch Kopfschrauben vorgesehen sein. Der Schenkel 22 des Lagerdeckels 20, der gegen oben durch die punktierte Linie 205 begrenzt ist, wird an der Stossstelle 210 gegen die Lagerschale 10 gepresst. Zwischen dem Schenkel 22 und dem Flansch 21 ist erfindungsgemäss eine Ausnehmung 23 vorgesehen. Die nicht dargestellte Hälfte des Lagers ist spiegelsymmetrisch ausgebildet.

Zwischen der Welle 6 und den Lagerflächen 106, 206 befindet sich ein Spalt 60, der stark überhöht dargestellt ist. Oben ist dieser Spalt rund 0,5 mm breit und in der Mitte bei der Stossstelle 210 rund 0,25 mm. Der Durchmesser der Welle beträgt rund 400 bis 1000 mm. In den Spalt 60 wird ein Schmiermittel gepumpt (Druck rund 4 bar), das durch die Rotation der Welle 6 mitgeschleppt wird. Dabei wird in dem keilförmigen Spalt 60 ein Druck im Schmiermittel bis zu rund 200 bar aufgebaut. Damit dieser Druckaufbau möglich ist, dürfen die Lagerflächen 106 und 206 beidseits der Stossstelle 210 zwischen Schenkel 22 und Lagerschale 10 der Grundplatte 1 keine Stufe bilden, d.h. sie müssen im wesentlichen in einer gemeinsamen Tangentialfläche liegen. Insbesondere darf bei Vorliegen einer Abweichung die Lagerfläche 206 des Deckels 20 gegenüber der Lagerfläche 106 der Lagerschale 10 nicht in den Spalt 60 vorstehen.

An dem Schenkel 22 greift ein Kräftepaar an, das einerseits durch die bei der Linie 205 wirkende Spannkraft P und andererseits durch die bei der Stossstelle 210 wirkende Gegenkraft P' gebildet wird. Ein entsprechendes Kräftepaar wirkt an dem nicht gezeigten Schenkel 22 der anderen Lagerhälfte. Dank den Ausnehmungen 23 sind die Kräftepaare mit Biegemomenten verbunden, die eine Spreizung der Schenkel 22 bewirken, bei der die Schenkelspitzen bezüglich dem Zentrum des Lagers nach aussen ausgelenkt werden. Die äusseren Flanken der Schenkel 22 treten durch die Spreizung mit der Grundplatte 1 auf ebenen Auflageflächen 201 in Kontakt. Der Abstand zwischen den äusseren Flanken der beiden Schenkel 22 muss im gespreizten Zustand mindestens rund 0,8 - 1,2 mm grösser als im ungespreizten sein.

Fig.3 zeigt strichpunktiert die Kontur 22' des Schenkels vor dem Aufspannen mit den Schrauben 7. In dieser Lage des Schenkels 22 lässt sich der Lagerdeckel 20 ohne Schwierigkeiten montieren. Damit die Spreizung der Schenkel 22 zu einer Berührung an den Auflageflächen 201 führt, muss die Ausnehmung 23 genügend tief sein: Zwischen der Ebene durch die Auflagefläche 201 und der Ausnehmung 23 liegt ein Zwischenraum, dessen maximale Tiefe d - gemessen senkrecht zur Auflagefläche 201 - grösser als eine Länge e sein muss. Diese Länge e ist mindestens ein Drittel, vorzugsweise die Hälfte der Dicke c der Lagerschale. Diese Dicke c beträgt rund 4 bis 10% des Wellendurchmessers, wobei dieser rund 0,4 bis 1 m ist. Der Abstand zwischen den äusseren Flanken 201 der beiden Schenkel 22 ist im gespreizten Zustand mindestens rund 0,4 - 1,2 mm grösser als im ungespreizten.

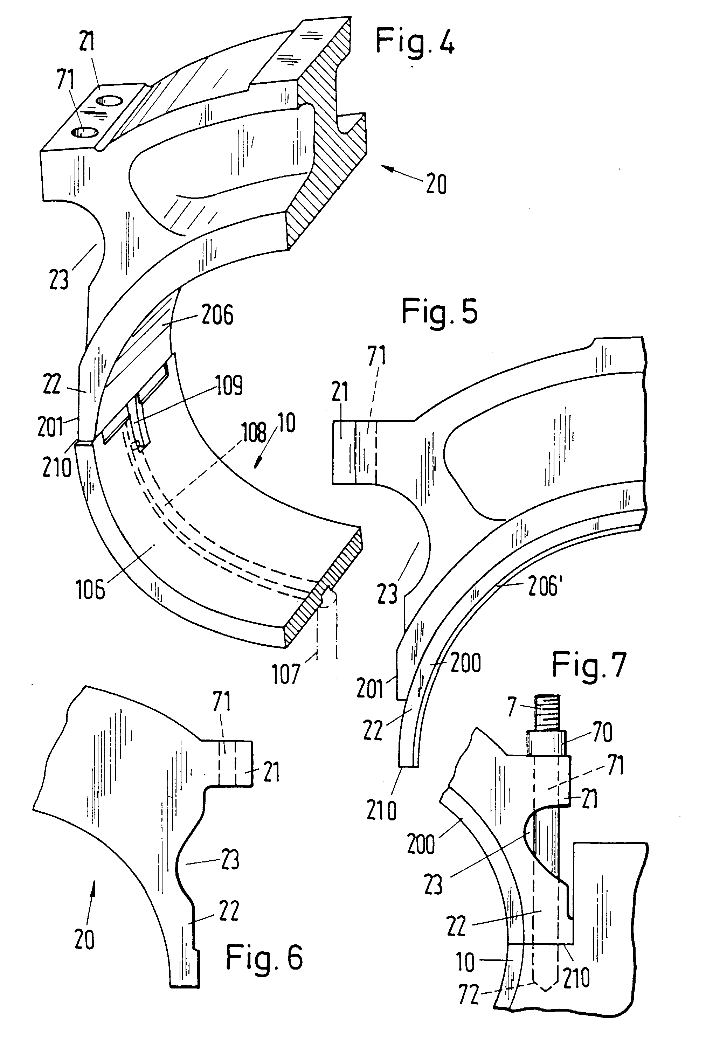

Das Schrägbild der Fig.4 zeigt die eine Hälfte eines vertikal geschnittenen Kurbelwellenlagers. Gegenüber den Darstellungen in den Figuren 2 und 3 ist hier zusätzlich eine Schmiermittelzuführung 107, 108 und 109 zu sehen. Das Schmiermittel wird über die strichpunktiert angedeutete Leitung 107 zugeführt. Nach der Weiterleitung durch den Kanal 108 gelangt das Schmiermittel über den Verteiler 109 in den Spalt 60 (siehe Fig.2).

Der Lagerdeckel 20 in den Figuren 2 bis 4 ist im wesentlichen monolithisch; d.h. er ist ein Gussstück. Seine Lagerfläche 206 ist - nicht dargestellt - durch eine Schicht aus gegossenenem Lagermetall gebildet. Der Lagerdeckel 20 kann auch eine Lagerschale 200 aufweisen, wie es in Fig.5 gezeigt ist. Die Lagerschale 200 weist ebenfalls eine Schicht, nämlich die Schicht 206', aus gegossenenem Lagermetall auf.

Am Lagerdeckel 20 der Fig.6 ist gezeigt, dass die erfindungsgemässe Ausnehmung 23 auch an einer anderen Stelle zwischen dem Flansch 21 und dem Schenkel 22 als in den Figuren 2 bis 5 angeordnet sein kann.

Bei der Ausführungsform der Fig.7 ist die Gewindeaufnahme 72 für die Schraube 7 in der Lagermitte, d.h. bei der Stossstelle 210, angeordnet.

## Patentansprüche

1. Lager für eine Kurbelwelle (6), die zwischen einer Lagerschale (10) auf einer Grundplatte (1) sowie einem Lagerdeckel (20) des Lagers angeordnet ist, wobei der Lagerdeckel zwei Schenkel (22) und zwei den Schenkeln jeweils zugeordnete Flansche (21) umfasst, die Flansche mittels Schrauben (7) gegen die Grundplatte (1) spannbar und gleichzeitig die Schenkel an Stossstellen (210) gegen die Lagerschale (10) anpressbar sind
zwischen den Schenkeln (22) und deren zugeordneten Flanschen (21) jeweils eine seitliche Ausnehmung (23) im Lagerdeckel vorgesehen ist,
dadurch gekennzeichnet, dass
die Tiefe der Ausnehmung so bemessen ist, daß unter Einwirkung der Schraubenkräfte an den Schenkeln Kräftepaare (P, P') angreifen, die eine Spreizung der Schenkel bewirken, bei der die Schenkel bezüglich dem Zentrum des Lagers nach aussen ausgelenkt werden.

2. Kurbelwellenlager nach Anspruch 1, dadurch gekennzeichnet, dass für die äusseren Flanken der Schenkel (22) an der Grundplatte (1) jeweils eine ebene Auflagefläche (201) vorgesehen ist, dass die Ausnehmung (23) bezüglich der Ebene durch diese Auflagefläche eine maximale Tiefe (d) aufweist, die grösser als ein Drittel, vorzugsweise grösser als die Hälfte der Dicke (c) der Lagerschale ist, wobei diese Dicke rund 4 bis 10% des Wellendurchmessers und der Wellendurchmesser rund 0,4 bis 1 m betragen.

3. Kurbelwellenlager nach Anspruch 1 oder 2, dadurch gekennzeichnet, dass der Lagerdeckel (20) und die Lagerschale (10) ein Lager für die Kurbelwelle (6) bildet, dessen Durchmesser rund 0,5 mm grösser als der Durchmesser der Kurbelwelle ist.

4. Kurbelwellenlager nach einem der Ansprüche 1 bis 3, dadurch gekennzeichnet, dass der Lagerdeckel (20) im wesentlichen monolithisch ist und eine Lagerfläche (206) aufweist, die durch eine Schicht aus gegossenenem Lagermetall gebildet ist.

5. Kurbelwellenlager nach einem der Ansprüche 1 bis 4, dadurch gekennzeichnet, dass die Lagerfläche (106, 206) ausser durch die Lagerschale (10) der Grundplatte (1) durch eine zweite Lagerschale (200) des Lagerdeckels (20) gebildet ist, wobei die zweite Lagerschale eine Schicht (206') aus gegossenenem Lagermetall aufweist.

6. Kurbelwellenlager nach einem der Ansprüche 1 bis 5, dadurch gekennzeichnet, dass die Flansche (21) durch Stiftschrauben (7) oder Kopfschrauben an der Grundplatte (1) befestigt und auf dieser aufgespannt sind.

7. Kurbelwellenlager nach einem der Ansprüche 1 bis 6, dadurch gekennzeichnet, dass die Lagerflächen (106, 206) beidseits der Stossstelle (210) zwischen Schenkel (22) und Lagerschale (10) der Grundplatte (1) im wesentlichen in einer gemeinsamen Tangentialfläche liegen.

8. Kurbelwellenlager nach einem der Ansprüche 1 bis 7, dadurch gekennzeichnet, dass der Abstand zwischen den äusseren Flanken (201) der beiden Schenkel (22) im gespreizten Zustand mindestens rund 0,4 - 1,2 mm grösser als im ungespreizten ist.

9. Kurbelwellenlager nach einem der Ansprüche 1 bis 8, dadurch gekennzeichnet, dass der Lagerdeckel (20) über der Lagerschale (10) der Grundplatte (1) angeordnet ist, und die zwei Stossstellen (210) zwischen der Lagerschale und dem Lagerdeckel in einer gemeinsamen horizontalen Ebene liegen.

10. Kreuzkopf-Dieselmotor mit einem Kurbelwellenlager gemäss einem der Ansprüche 1 bis 9.

## Claims

1. Bearing for a crankshaft (6), which is arranged between a bearing shell (10) on a bedplate (1) and also a bearing cap (20) of the bearing, wherein the bearing cap (20) comprises two legs (22) and two flanges (21) respectively associated with the legs, wherein the flanges can be clamped against the bedplate (1) by means of screws (7) and, at the same time, the legs can be pressed against the bearing shell (10) at joints (210), and wherein a lateral recess (23) is provided in the bearing cap in each case between the legs (22) and their associated flanges (21),
characterised in that the depth of the recess is so dimensioned that under the action of the screws force pairs (P, P') act on the legs and splay the legs, with the legs being deflected outwards relative to the centre of the bearing.

2. Crankshaft bearing according to claim 1,
characterised in that a flat support surface (201) is provided on the bedplate (1) for each of the outer flanks of legs (22), in that the recess (23) has a maximum depth (d) relative to the plane through this support surface which is greater than a third, and preferably greater than one half of the thickness (c) of the bearing shell, this thickness being about 4 - 10 % of the shaft diameter and the shaft diameter being about 0.4 - 1 m.

3. Crankshaft bearing according to claim 1 or 2,
characterised in that bearing cap (20) and bearing shell (10) form a bearing for the crankshaft (6) the diameter of which is around 0.5 mm greater than the diameter of the crankshaft.

4. Crankshaft bearing according to one of the claims 1 to 3,
characterised in the that bearing cap (20) is essentially monolithic and has a bearing surface (206) formed from a layer of cast bearing metal.

5. Crankshaft bearing according to one of the claims 1 to 4,
characterised in that the bearing surface (106, 206) is formed, apart from the bearing shell (10) of the bedplate (1), by a second bearing shell (200) of the bearing cap (20), the second bearing shell having a layer (206') of cast bearing metal.

6. Crankshaft bearing according to one of the claims 1 to 5,
characterised in that flanges (21) are secured and clamped to the bedplate (1) by studs (7) or headed bolts.

7. Crankshaft bearing according to one of the claims 1 to 6,
characterised in that the bearing surfaces (106, 206) on both sides of the joint (210) between leg (22) and bearing shell (10) of the bedplate (1) essentially lie in a common tangential surface.

8. Crankshaft bearing according to one of the claims 1 to 7,
characterised in that the distance between the outer flanks (201) of the two legs (22) is at least about 0.4 - 1.2 mm larger in the splayed state than in the unsplayed state.

9. Crankshaft bearing according to one of the claims 1 to 8,
characterised in that the bearing cap (20) is located above the bearing shell (10) of the bedplate (1) and the two joints (210) between the bearing shell and the bearing cap lie in a common horizontal plane.

10. Cross-head diesel engine with a crankshaft bearing according to one of claims 1 to 9.

## Revendications

1. Palier pour un vilebrequin (6) qui est disposé entre une coupelle de palier (10) sur une plaque de base (1) et un couvercle de palier (20) du palier, où le couvercle de palier comprend deux branches (22) et deux brides (21) associées respectivement aux branches, où les brides peuvent être serrées par des boulons (7) contre la plaque de base (1) et en même temps les branches peuvent être appliquées à des points d'impact (210) contre la coupelle de palier (10), qu'il est prévu entre les branches (22) et leurs brides associées (21) respectivement un évidement latéral (23) dans le couvercle de palier, caractérisé en ce que la profondeur de l'évidement est dimensionnée de façon que sous l'action des forces de vissage s'appliquent aux branches des paires de forces (P, P') qui provoquent un écartement des branches, où les branches, relativement au centre du palier, sont déviées vers l'extérieur.

2. Palier de vilebrequin selon la revendication 1, caractérisé en ce qu'il est prévu pour les flancs extérieurs des branches (22) à la plaque de base (1) respectivement une surface d'application plane (201), que l'évidement (23) présente relativement au plan, du fait de cette surface d'application une profondeur maximale (d) qui est supérieure à un tiers, de préférence supérieure à la moitié de l'épaisseur (c) de la coupelle de palier, cette épaisseur représentant environ 4 à 10% du diamètre de l'arbre, et le diamètre de l'arbre est d'environ 0,4 à 1 m.

3. Palier de vilebrequin selon la revendication 1 ou 2, caractérisé en ce que le couvercle de palier (20) et la coupelle de palier (10) forment un palier pour le vilebrequin (6) dont le diamètre est plus grand d'environ 0,5 mm que le diamètre du vilebrequin.

4. Palier de vilebrequin selon l'une des revendications 1 à 3, caractérisé en ce que le couvercle de palier (20) est essentiellement monolithe et présente une surface de palier (206) qui est formée par une couche en métal de palier coulé.

5. Palier de vilebrequin selon l'une des revendications 1 à 4, caractérisé en ce que la surface de palier (106, 206), à part par la coupelle de palier (10) de la plaque de base (1), est formée par une deuxième coupelle de palier (200) du couvercle de palier (20), la deuxième coupelle de palier présentant une couche (206') en métal de palier coulé.

6. Palier de vilebrequin selon l'une des revendications 1 à 5, caractérisé en ce que les brides (21) sont fixées par des boulons filetés (7) ou des boulons à tête à la plaque de base (1) et sont serrées sur celle-ci.

7. Palier de vilebrequin selon l'une des revendications 1 à 6, caractérisé en ce que les surfaces de palier (106, 206) se situent des deux côtés du point d'impact (210) entre la branche (22) et la coupelle de palier (10) de la plaque de base (1) sensiblement sur un plan tangentiel commun.

8. Palier de vilebrequin selon l'une des revendications 1 à 7, caractérisé en ce que l'écart entre les flancs extérieurs (201) des deux branches (22), à l'écart écarté, est au moins environ 0,4-1,2 mm plus grand qu'à l'état non écarté.

9. Palier de vilebrequin selon l'une des revendications 1 à 8, caractérisé en ce que le couvercle de palier (20) est disposé au-dessus de la coupelle de palier (10) de la plaque de base (1) et que les deux points d'impact (210) se situent entre la coupelle de palier et le couvercle de palier dans un plan horizontal commun.

10. Moteur diesel à crosse avec un palier de vilebrequin selon l'une des revendications 1 à 9.
